# FASCICULE DE BREVET EUROPEEN

(11) **EP 0 546 905 B1**
(45) Date de publication et mention de la délivrance du brevet: **02.11.1995**
(21) Numéro de dépôt: 92403294.9
(22) Date de dépôt: 07.12.1992
(51) Int. Cl.: G06T 5/00, H04N 1/40

(54) **Procédés d'analyse d'images**
Verfahren zur Bildanalyse
Methods for image analysis

(30) Priorité: 10.12.1991 FR 9115308
(43) Date de publication de la demande: 16.06.1993
(73) Titulaire: GENERAL ELECTRIC CGR S.A., F-92130 Issy les Moulineaux (FR)
(72) Inventeur: Grimaud, Michel, F-75116 Paris (FR)
(74) Mandataire: Schmit, Christian Norbert Marie

(56) Documents cités:
- FR-A- 2 656 106
- IBM TECHNICAL DISCLOSURE BULLETIN. vol. 31, no. 6, Novembre 1988, NEW YORK US pages 471 - 473 'Fast Algorithm for Thresholding Images Whose Histograms are Bimodal'
- PATENT ABSTRACTS OF JAPAN vol. 14, no. 371 (E-963)10 Août 1990 & JP-A-21 34 910 ( SONY CORP. ) 23 Mai 1990
- PATENT ABSTRACTS OF JAPAN vol. 9, no. 273 (P-401)(1996) 30 Octobre 1985 & JP-A-60 118 979 ( FUJITSU K.K.) 26 Juin 1985
- PROCEEDINGS DU CONGRES AFCET Novembre 1991, LYON pages 847 - 857 MEYER 'Un algorithme optimal de ligne de partage des eaux'

## Description

La présente invention a pour objet un procédé d'analyse d'images dont le but est d'améliorer la lisibilité des images analysées. Elle s'applique au traitement de toutes les images, à une, deux ou trois dimensions, et elle est particulièrement utile dans le domaine médical. Elle concerne cependant tous les domaines où des images sont acquises, par un moyen de mesure quelconque, d'une grandeur physique d'un objet étudié. Cette mesure résulte en un signal d'image. La grandeur physique peut être une grandeur visible, et le procédé concerne alors, par exemple, les images acquises avec une caméra de télévision. Ou bien elle peut être une grandeur invisible, par exemple le coefficient d'absorption des rayons X dans un tissu, mais transformé en une grandeur visible par un traitement. Les images concernées seront de préférence des images numérisées parce que le traitement par ordinateur de telles images est plus simple. Cependant, selon le procédé de l'invention, le traitement analogique est aussi possible.

Une des applications de l'invention est un procédé de contourage d'objets dans une image, par exemple avec un traitement dit LIGNE DE PARTAGE DES EAUX (LPE), comme publié dans SEGMENTATION D'IMAGES ET MORPHOLOGIE MATHEMATIQUE, Thèse Ecole des Mines de Paris, S. BEUCHER, Juin 1990. On y utilise des minima, ou des maxima, sélectionnés par exemple avec le procédé de l'invention dans une première étape, pour repérer les objets à contourer. Ces minima ou maxima sélectionnés sont donc des marqueurs trouvés automatiquement. Une fois que ceux-ci sont repérés, on cherche à extraire automatiquement leur contour avec l'algorithme LPE. Cette dernière transformation est elle même mise en oeuvre avec succès à l'aide d'un procédé dit de traitement par FILES D'ATTENTES HIERARCHISEES ou FAH publié dans " Un algorithme optimal de ligne de partage des eaux", Fernand MEYER, Proceeding Congres AFCET, Lyon, Novembre 91, page 847-859.

En effet, dans des procédés de contourage automatique il est parfois nécessaire de marquer au préalable dans l'image les zones de cette image qui doivent être délimitées. Ce marquage peut être manuel. Il conduit alors à une procédure peu pratique d'interaction entre l'opérateur et la machine de traitement. Il peut de préférence être lui-même automatique. Mais de manière à rendre significatifs les points d'image marqués, ou marqueurs, ceux-ci sont déterminés selon l'invention par la comparaison de leur dynamique à un seuil.

Dans une autre application l'invention sert à repérer dans une image angiographique la présence de vaisseaux à des fins de filtrage. On cherche ainsi à y éliminer des structures faiblement contrastées qui ne représentent pas des vaisseaux. D'autres applications sont également possibles. Pour clarifier l'invention, et pour en donner une explication complète, elle sera décrite dans le cadre de la première application citée.

Le principal défaut des images est matérialisé par la présence du bruit. Le bruit a pour résultat d'apporter une altération de la valeur du signal de l'image en chaque point de l'image. Cette altération suit une loi statistique. L'altération peut être positive ou négative. Une des caractéristiques du bruit est d'être incohérent. L'altération en un point d'image n'est ainsi pas corrélée aux altérations du signal d'image en un point voisin dans l'image. Cette incohérence a induit un traitement d'image visant à éliminer le bruit. Ce traitement est un traitement par lequel, dans le principe, on remplace le signal d'image en un point de l'image par une combinaison (par exemple une moyenne) des signaux dans des points d'image voisins de ce point. Ce traitement est équivalent à un filtrage spatial.

Un tel filtrage spatial présente un inconvénient inhérent à son principe. Il gomme en effet la présence des petites structures puisque le signal d'image de ces petites structures est amorti par le signal d'image des structures qui avoisinent ces petites structures. En fin de compte elles disparaissent. Ceci est particulièrement gênant quand, par exemple pour le dépistage du cancer du sein, on cherche à révéler la présence des micro-calcifications à l'intérieur d'un tissu. Le signal d'image de ces micro-calcifications est alors moyenné avec le signal d'images des tissus avoisinant : on ne le voit plus.

Pour résoudre ce problème d'une autre façon on a déjà tenté de remplacer le filtrage spatial par un traitement de contraste dans lequel on relève tous les minima ou maxima du signal d'image. Un minimum ou maximum du signal d'image est une valeur du signal d'image correspondant à un lieu particulier de l'image. On dit alors, par extension, que ce lieu est lui-même un minimum ou un maximum de l'image. Pour ce lieu particulier de l'image tous les points d'image directement voisins et contigus à ce point présentent des signaux d'image dont la valeur est plus grande (ou plus petite s'il s'agit d'un maximum). Un minimum (ou un maximum) peut aussi être un ensemble de points voisins, de même valeur de signal d'image, et tels que tout voisin de cet ensemble a un signal d'image dont la valeur est strictement supérieure (respectivement inférieure) à celle du signal d'image des points de l'ensemble. Cet ensemble de points voisins de même valeur de signal est appelé un plateau. Un point d'image est considéré comme directement voisin d'un autre point d'image lorsqu'on ne peut trouver de points intermédiaires entre ce point et son voisin direct. Lorsqu'il s'agit de signaux d'image numérisés les échantillons voisins du signal se réfèrent bien entendu à des points d'images voisins. Un maximum du signal d'images correspond, dans les mêmes conditions, à un lieu de l'image dont tous les voisins directs présentent des signaux d'image plus faibles. Un tel traitement de contraste n'est malheureusement pas efficace car il présente sur un pied d'égalité les altérations du signal d'image résultant du bruit et les modifications de ce signal résultant de la présence des structures que l'on veut montrer.

Dans la suite de cet exposé on présentera pour simplifier un signal vidéo - ligne analogique de télévision. On expliquera le principe des traitements de l'invention sur un tel signal. Puis on appliquera ce traitement à une image à deux dimensions. Enfin, en expliquant le traitement numérique d'un tel signal analogique on en présentera une généralisation à trois dimensions.

Dans un signal de télévision, en monochrome pour simplifier, on note une évolution temporelle (liée à une description spatiale d'une ligne) d'un signal de luminance. Ce signal de luminance présente des minima et des maxima. Pour les repérer on peut regarder pour chaque point, ou plutôt pour chaque plateau, si les deux voisins aux extrémités du plateau ont des valeurs de luminance inférieures ou supérieures. Si c'est le cas, on dit que le point est un maximum (ou un minimum). Pour une image à deux dimensions, un processus analogue peut être mis en place et on testera la valeur de luminance de tous les points à la frontière du plateau. D'autres solutions de repérage des maxima (ou des minima) existent comme par exemple celle qui consiste à faire une reconstruction géodésique numérique. Cette technique est également publiée dans le premier article cité. On ne s'attachera pas à détailler cette étape car toutes les méthodes conduisent au même résultat.

Ces méthodes ne conduisent malheureusement qu'à repérer les maxima (ou minima), elles ne servent pas à les qualifier. Dans l'invention pour évaluer le contraste des structures correspondant à ces maxima ou ces minima, par exemple pour qualifier ces maxima ou minima comme représentant soit du bruit soit des structures recherchées, on a eu l'idée de mesurer les hauteurs de ces maxima, ou les profondeurs de ces minima. Ces mesures sont ensuite comparées à un seuil. Quand les mesures sont inférieures au seuil on décide que les maxima, ou minima, concernés par cette mesure représentent du bruit. Dans le cas contraire on les retient comme des index pointant sur des structures à identifier.

L'originalité de l'invention tient au type de la mesure effectuée. La profondeur d'un minimum sera ainsi égale, de préférence, à la différence minimum entre, d'une part, la valeur de luminance du minimum étudié et, d'autre part, la valeur de luminance du point de plus forte luminance qui se trouve sur un chemin qui permet d'accéder à un point avec un signal de luminance plus faible que celle de ce minimum. Cette nouvelle mesure de différence, ou de hauteur, est appelée dynamique. Ces mesures sont ensuite comparées à un seuil. Quand les mesures sont inférieures au seuil, on conclut que les maxima ou minima représentent du bruit ou au moins des structures de faible contraste. Dans le cas contraire, on considère les minima ou maxima comme des index pointant sur des structures à fort contraste. Cette mesure permet ainsi de sélectionner des structures sur un critère de contraste.

Lorsqu'on cherche à utiliser cette définition de profondeur pour éliminer les maxima ou minima dus au bruit, la détermination de la valeur du seuil est elle-même liée à un bruit de détermination qu'on accepte. En effet, plus le seuil est élevé plus on élimine du bruit et moins aussi on voit les structures. On a trouvé qu'une bonne valeur de seuil pouvait correspondre à une mesure de la moyenne du bruit à l'endroit de la mesure.

Pour la mesure de la hauteur des maxima ou de la profondeur des minima on peut retenir plusieurs techniques. On a remarqué cependant que la technique préférée permettait de repérer la présence de ces maxima ou minima en n'importe quel endroit de l'image sans être influencé par ailleurs par le fait que le signal d'image dans l'environnement de ces maxima ou minima est lui-même globalement fort ou faible en valeur absolue. Afin de simplifier encore l'explication de l'invention, cette explication sera limitée à la recherche de la profondeur des minima. Mais il faut bien comprendre que par dualité elle s'applique aussi à la recherche de la hauteur des maxima.

Dans la technique préférée on commence par chercher un minimum. On prend par exemple le premier trouvé sur le signal vidéo. A partir de ce minimum on explore les voisins dans une première direction. On s'arrête d'explorer quand, dans cette première direction, on trouve un point dont le signal d'image est inférieur au signal d'image du minimum dont on est parti. On retient alors, pour ce minimum et pour cette première direction, comme profondeur le maximum de différence rencontrée entre la valeur de ce signal d'image au minimum et la valeur du signal d'image des points ainsi explorés. Pour un signal vidéo ligne on explore ensuite l'autre direction, dans l'autre sens. On trouve alors un autre maximum de différence pour cette autre direction. En définitive, on retient comme profondeur de ce minimum, on parle alors de dynamique du minimum, le minimum de ces deux maxima de différence trouvés.

Plutôt que de s'arrêter d'explorer lorsqu'on a trouvé un point dont le signal d'image est inférieur à celui du minimum dont on est parti, on peut s'arrêter deux ou trois minimum plus loin. Ou bien même on peut s'arrêter lorsque la différence devient elle-même supérieure au seuil fixé. On peut aussi retenir comme dynamique le maximum des différences maxima, ou bien la différence placée en second, etc.... On peut encore limiter l'environnement à un ènième maximum rencontré à partir du minimum étudié. Dans tous les cas on explore ainsi l'image sur un voisinage dont la dimension n'est pas figée géographiquement mais dont la taille est liée à l'évolution plus ou moins contrastée du signal d'image. Puis, dans ce voisinage, on attribue au minimum étudié une dynamique fonction de la valeur du signal d'image à ce minimum et à un point caractéristique de ce voisinage. On recommence cette démarche, bien entendu, pour tous les minima.

Une définition similaire se présente bien entendu pour la recherche et la quantification des maxima. On peut utiliser la dynamique élaborée selon les principes de l'invention pour différencier des extrema associés à des objets de ceux dus au bruit. Mais on peut aussi l'utiliser pour discriminer des objets quelconques entre eux sur des critères de contraste.

L'invention a donc pour objet un procédé de traitement d'image, caractérisé en ce qu'il comporte les étapes suivantes:
- on repère des points minima d'image pour lesquels un signal d'image est un minimum, c'est à dire que tous les points d'image directement voisins et contigus à ce point présentent des signaux d'image dont la valeur est plus grande;
- on mesure pour chacun de ces points minima une dynamique de signal d'image en fonction du voisinage de ces points minima, cette dynamique de signal étant constituée, pour un point minimum, par la différence entre le signal d'image en ce point minimum et un point minimum maximorum de ce signal d'image, chaque point maximum considéré pour déterminer ce point minimum maximorum étant maximum pour l'ensemble des points directement voisins et contigus à ce point maximum se trouvant sur un des chemins conduisant de ce point minimum à une limite de ce voisinage,
- on extrait de ces points minima ceux dont la valeur de la dynamique est supérieur à un seuil, et
- on traite l'image en fonction de la liste des points minima extraits.

L'invention a de plus pour objet un procédé de traitement d'image, caractérisé en ce qu'il comporte les étapes suivantes:
- on repère des points maxima d'image pour lesquels un signal d'image est un maximum, c'est à dire que tous les points d'image directement voisins et contigus à ce point présentent des signaux d'image dont la valeur est plus petite;
- on mesure pour chacun de ces points maxima une dynamique de signal d'image en fonction du voisinage de ces points maxima, cette dynamique de signal étant constituée, pour un point maximum, par la différence entre le signal d'image en ce point maximum et un point maximum minimorum de ce signal d'image, chaque point minimum considéré pour déterminer ce point maximum minimorum étant minimum pour l'ensemble des points directement voisins et contigus à ce point minimum se trouvant sur un des chemins conduisant de ce point maximum à une limite de ce voisinage,
- on extrait de ces points maxima ceux dont la valeur de la dynamique est supérieur à un seuil, et
- on traite l'image en fonction de la liste des points maxima extraits.

Le reste de l'analyse est classique. Il ne sera pas détaillé ici. Dans un exemple cette analyse résulte en un contourage comme indiqué ci-dessus.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1 : le principe de la quantification des minima et maxima d'un signal vidéo (dans un exemple à une dimension) ;
- figure 2 : le principe ci-dessus appliqué à une image à deux dimensions ;
- figure 3 : l'organigramme de la succession des opérations nécessaires pour mener à bien la quantification de la dynamique ;
- figure 4 : le schéma de principe des moyens informatiques nécessaires pour mettre en oeuvre l'invention ;
- figure 5 : une représentation plus précise concernant la nature des chemins le long desquels on cherche les minima ou maxima;
- figure 6 : une représentation des effets du traitement de l'invention.

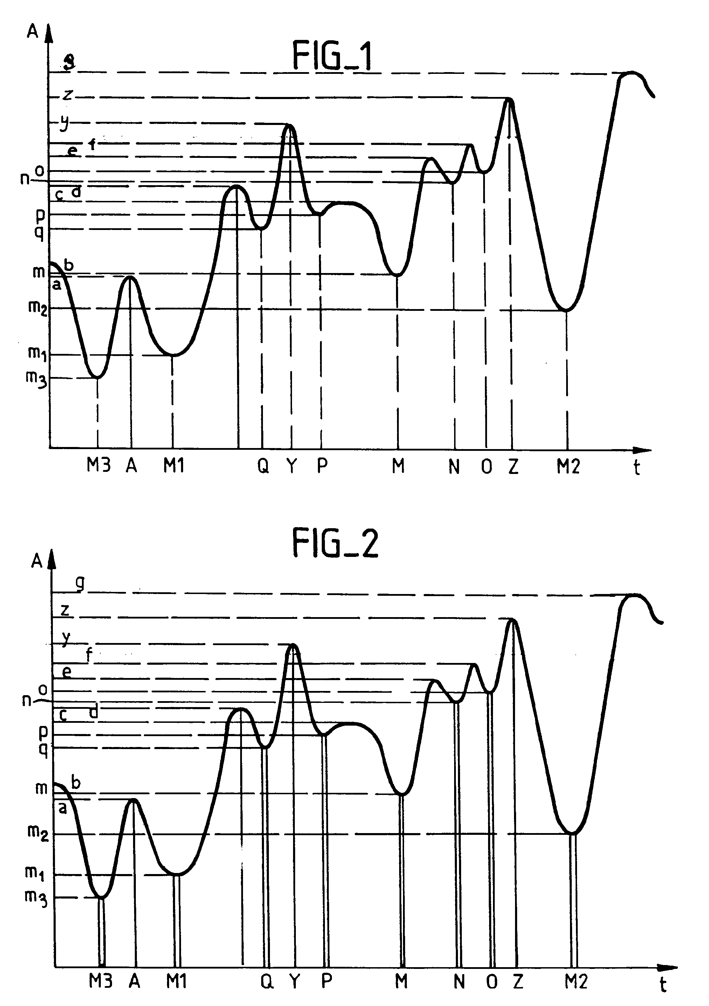

La figure 1 représente le principe de la quantification des minima (ou des maxima) d'un signal vidéo. L'explication va dans un premier temps être donnée en référence à un tel signal vidéo analogique bien que, comme on l'a expliqué précédemment le traitement sera fait de préférence de manière numérique. Le signal vidéo représenté a une amplitude mesurée sur un axe A et évolue avec le temps t. Ce signal vidéo passe par un ensemble de minima notés respectivement et successivement dans le temps M₃ M₁ Q P M N O M₂. Les valeurs du signal d'image, du signal vidéo, à l'endroit de ces points prennent respectivement les valeurs m₃ m₁ q p m n o m₂. Ce signal rencontre également des maxima dont quelques uns sont indiqués, les maxima Y et Z et dont les valeurs prennent progressivement des valeurs a, b, c, d, e, f, g et, aux points Y et Z les valeurs y et z.

Selon l'invention on commence déjà par repérer tous les minima (ou maxima) du signal d'image. Ce repérage est par exemple effectué en comparant pour chaque point le signal d'image à celui de ses deux voisins. Lorsqu'on a affaire à un plateau, on compare la valeur du signal des points du plateau à la valeur du signal des voisins des deux extrémités du plateau. Si les valeurs de signal des voisins sont strictement supérieures, on sait qu'on est en présence d'un minimum. De même, si les deux voisins ont des valeurs strictement inférieures, le plateau est un maximum. Ou même on peut repérer les changement de signe de la dérivée de ce signal d'image en le faisant passer dans un filtre de type passe haut dérivateur. On a donc ainsi repéré M₃ M₁ Q P M N O M₂. On va maintenant estimer la dynamique de chacun de ces minima. D'une manière préférée selon ce qui a été indiqué précédemment on va rechercher pour chaque minimum quel est le minimum voisin dont la valeur du signal d'image serait inférieure à la valeur du signal d'image du minimum étudié. Par exemple, si on étudie le minimum M la valeur des signaux d'image des minimum P et Q n'est pas inférieure à celle de M. Par contre, la valeur m₁ du signal d'image du minimum M1 lui est inférieure. Dans une direction, allant ici en remontant le temps, le voisinage déterminé selon l'invention pour M est ainsi l'ensemble des points compris entre M et M₁. On effectue une même discrimination dans l'autre direction, dans le sens des temps croissants du signal vidéo. On rencontre après le minimum M les minima N et O (dont la valeur du signal d'image est supérieure à la valeur du signal d'image de M) puis le minimum M₂ dont la valeur m₂ du signal d'image est inférieure à celle de M. Sur la droite, le voisinage de M et donc limité par M₂.

L'ensemble des voisins de M est donc dans le cas présent l'ensemble des points d'image compris entre M₁ et M₂. Dans chaque direction on repère quel est le maximum du signal d'image compris dans le voisinage. Dans le sens où on remonte le temps ce maximum est atteint au point d'image Y et la valeur de ce signal vaut y. En parcourant le temps dans le sens croissant ce maximum est atteint au point Z et la valeur du signal d'image correspondant est z. Dans un exemple on a dit qu'on retiendrait comme point caractéristique du minimum (M), pour l'ensemble des directions d'exploration, (ici les directions dans le sens du temps et en remontant le temps), le maximum (Y) du voisinage dont la valeur du signal est inférieure aux valeurs de signal des autres maxima des autres directions d'exploration. Ou bien encore, on retient un maximum pour chaque direction d'exploration (ici,Y et Z correspondant respectivement aux directions dans le sens du temps et en remontant le temps). Dans un exemple, on a dit que parmi ces maxima, on conservait le maximum dont la valeur est la plus faible: le minimum maximorum Y dans le cas présent. Autrement dit, le point caractéristique ici est Y et la dynamique du point M est égale ici à y-m. En effet Y est le point le plus haut dans le voisinage défini à gauche, Z est le point le plus haut dans le voisinage défini à droite, mais Y est plus bas que Z.

On voit que le voisinage n'a aucune dimension géographique prédéterminée et que la manière de le définir est arbitraire. Elle n'a aucune dimension géographique déterminée parce que la distance qui sépare le point M₁ du point M est totalement aléatoire et ne dépend que du contraste de l'image elle-même. Elle n'est donc pas imposée par un filtre de dimension spatiale déterminée. Elle est d'autre part arbitraire parce qu'au lieu de choisir comme limite le premier minimum M₁ dont la valeur du signal d'image est inférieure à la valeur du signal d'image du minimum étudié M, on aurait pu prendre le deuxième minimum M₃ dont la valeur du signal d'image est elle-même inférieure à la première valeur de signal d'image inférieur au minimum étudié. On voit qu'en agissant ainsi on peut déterminer un voisinage plus ou moins grand, donc par conséquent on peut explorer le contraste d'une manière différente.

Explorer le contraste nécessite ainsi d'une part de déterminer le voisinage et deuxièmement de calculer la valeur de la dynamique. Pour calculer la valeur de la dynamique on a dit qu'on avait retenu la différence y-m et il est évident qu'on aurait pu trouver un maximum F sélectionné sur un autre critère que celui proposé. Par exemple, on aurait pu retenir une différence f-m qui aurait correspondu au premier maximum F trouvé dans une direction inférieure au plus petit Y des maxima mesurés sur l'ensemble des directions. En définitive toute définition de la dynamique selon l'invention est acceptable à partir du moment où elle respecte la notion de voisinage déterminée en fonction du contraste et la notion de différence entre un maximum et le minimum étudié. Le voisinage est déterminé par la relation entre les niveaux de gris des points successifs dans chacune des directions et le niveau de gris du minimum. Dans chacun des voisinages, le maximum d'intérêt est déterminé par un critère qui peut être, par exemple, le maximum de plus forte valeur dans le voisinage.

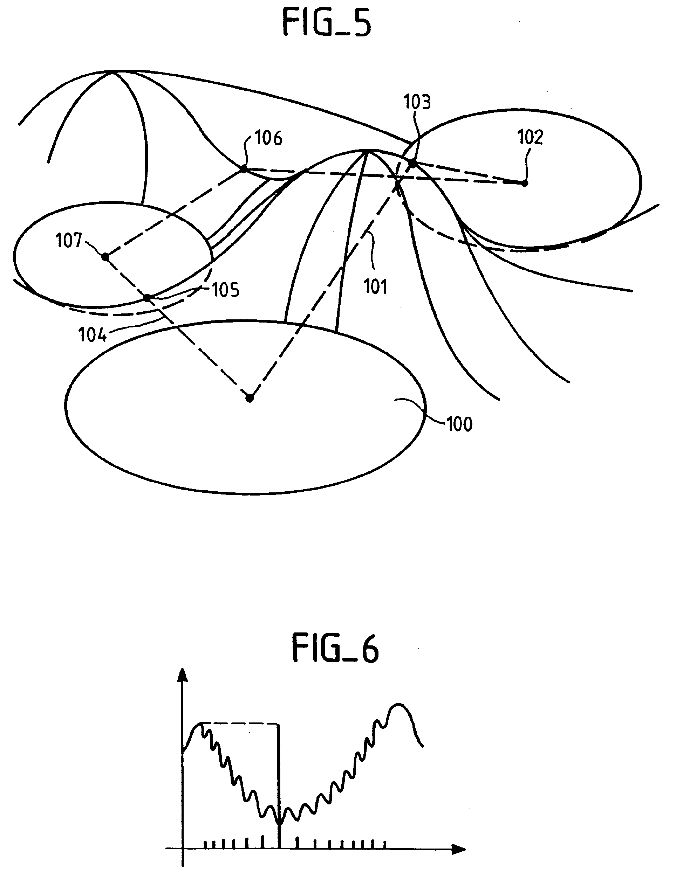

Sur un signal vidéo il est évidemment facile de déterminer deux directions d'exploration. Dans des images à deux dimensions, celles qu'on a le plus l'habitude de voir, le nombre de directions d'exploration est très grand. Autour d'un minimum tous les rayons d'un cercle sont ainsi des directions d'exploration. Le schéma de principe montré sur la figure 1 n'est pas transposable tel quel, bien que son esprit sera conservé. En outre les rayons d'un cercle, malgré leur infinité, ne sont seulement que quelques-unes des directions à explorer. En effet les directions d'exploration ne sont pas nécessairement rectilignes. La notion de voisinage doit être étendue. En effet sur une image à deux dimensions, il n'y a plus un chemin unique entre deux points: toutes les lignes courbes ou brisées reliant les deux points sont acceptées. Par exemple la figure 5 montre, à partir d'un bassin versant 100, une direction d'exploration 101 rectiligne (vue du dessus) pour aboutir à un bassin versant 102. La direction 101 culmine à une altitude élevée 103. Par contre, si on emprunte un chemin 104 non rectiligne passant par les cols 105 et 106 et par un bassin versant intermédiaire 107, la plus haute altitude rencontrée est celle de l'un de ces cols 105 ou 106. Selon ce qui a été dit précédemment l'altitude du col le plus haut sera retenu pour calculer la dynamique. Cette dernière altitude conduira à une dynamique plus faible que si on avait retenu l'altitude 103. On montrera par la suite comment l'algorithme choisi de traitement par FAH permet de tenir compte d'une manière préférée de l'existence de ces cols. Néanmoins on pourrait accepter également une autre définition du mode d'exploration, en n'acceptant que les directions rectilignes par exemple.

Sur la figure 2 on a représenté schématiquement un profil d'un paysage topographique. Ce profil est en tout point semblable au signal vidéo de la figure 1, pour mieux faire comprendre. Ce paysage est susceptible d'être inondé à partir d'une source injectant son liquide depuis un plan contenant l'axe des abscisses. Ainsi, il y a un petit tuyau susceptible de propager, depuis le fond, une inondation vers chaque minimum.

Dans un premier temps pour effectuer ce type d'opération on doit donc repérer tous les minima du signal de l'image. Dans ce but tous les points d'image sont pris, l'un après l'autre, et la valeur de leur signal d'image est comparée à celles de leurs voisins ou à celle des voisins de la frontière du plateau dans le cas d'un plateau. Dans une image à deux dimensions les voisins directs d'un point d'image, d'abscisse et d'ordonnée données, sont des points dont les abscisses et/ou les ordonnées diffèrent des abscisses et ordonnées du point choisi d'une seule unité. Il est donc facile pour chacun des points d'une image de disposer de la carte de ses voisins directs. Pour tous ces voisins directs, il est également possible de savoir s'il ont une valeur de signal d'image inférieure à la valeur du signal d'image du point étudié, ou supérieure, ou bien inférieure pour certains de ces points et supérieure pour d'autres. Dans le premier cas, on dira que le point étudié est un maximum, dans le second qu'il est un minimum et dans le troisième qu'il n'est ni l'un ni l'autre. Dans le cas d'un plateau la procédure est légèrement plus complexe. Il faut considérer tous les points voisins de la frontière du plateau. Si tous les voisins du plateau sont d'une altitude supérieure, le plateau est un minimum. Si tous les voisins du plateau sont d'une altitude inférieure le plateau est un maximum. On est donc ainsi capable simplement de déterminer la liste des points qui sont des minima (ou des maxima) de l'image.

La figure 2 représente une coupe, prise selon une dimension, d'un tel signal d'image représentant le paysage. L'amplitude A n'est pas nécessairement une altitude géographique. Elle peut tout aussi bien être une valeur de luminance et représenter ainsi n'importe quel paramètre physique mesuré dans un corps étudié. Une fois que la liste des minima M3 à M2 est connue, on range chacun des points de cette liste dans une file d'attente hiérarchisée dite FAH, du type de celle décrite dans l'article cité ci-dessus. Pour ranger les points en pratique on range les adresses (correspondant aux coordonnées des points de l'image) dans des files d'attentes. Chaque adresse de point est rangée dans une file qui correspond à la valeur du signal d'image du point. Il y a autant de files que de valeur possible pour le signal. Ces files sont rangées les unes par rapport aux autres selon la valeur croissante du signal qu'elles représentent lorsqu'on travaille sur les minima et selon la valeur décroissante du signal lorsqu'on travaille sur les maxima.

La file d'attente hiérarchisée possède alors, dans sa première file, un point dont la valeur du signal d'image est plus petite que tous les minima de ce signal d'image. Il est le premier point qui doit être extrait de la file d'attente. Pour ce point, par exemple ici le point M₃, on cherche quels sont ses voisins directs. On utilise pour rechercher ses voisins une même démarche que celle qui a permis de déterminer les minima. Dans une image à deux dimensions, on peut ainsi déterminer huit points situés sur les médianes et les diagonales d'un carré entourant le point M₃ étudié. On introduit ces huit points dans la file d'attente hiérarchisée, chacun à un niveau hiérarchique qui correspond à sa valeur de signal d'image. Sur une image à deux dimensions, on peut définir d'autres relations de voisinage et un point aura, par exemple, quatre ou six voisins. Il en aura six par exemple si la maille autour du point est hexagonale. Le type de voisinage n'influe aucunement sur le principe de l'algorithme qui reste identique quel que soit le nombres des voisins considérés. De la même façon, sur une image à trois dimensions, on pourra définir des relations de voisinage avec par exemple 26 voisins. En effet, si l'image est une image en trois dimensions, chaque point a 26 voisins. On peut, avec certaines hypothèses, limiter le nombre des voisins étudiés à moins que 26.

On introduit donc les voisins dans la file d'attente, et on leur donne par ailleurs à ce moment un label "lm₃" montrant qu'ils ont été introduits dans la file d'attente à cause de leur voisinage au point M₃. Cette introduction est cependant conditionnée par le fait que ces points n'y ont pas déjà été introduit avec le label "lm₃".

Le fait de leur attribuer un label revient à considérer qu'on a tenté d'inonder le paysage de la figure 2 à partir de la source souterraine et que les points voisins de M₃ sont ainsi les premiers noyés. Ils sont en quelque sorte mouillés par le liquide de M₃.

En expliquant les choses de cette façon on voit qu'il y a une équivalence bien compréhensible entre le traitement informatique nécessaire, et ce qui se passe dans l'inondation simulée. Petit à petit on extrait les points de la file d'attente hiérarchisée et bien entendu les voisins de M₃, qui ont été introduits dans cette file d'attente à des niveaux hiérarchiques faibles, puisque leur niveau de signal est lui-même faible, vont être les premiers extraits avant, par exemple, qu'on arrive à devoir extraire le point M₁.

Chaque point extrait fait entrer ses voisins dans la file d'attente sauf si ceux-ci y sont déjà où s'il y ont été. En effet, si un point a déjà été inondé, il n'est pas nécessaire de l'inonder à nouveau. Dans ce but le mot mémoire attribué à chaque point introduit dans la FAH est muni d'un indicateur I. Cet indicateur I, différent du label, est mis à une certaine valeur, par exemple la valeur binaire 0, pour tous les points avant le début de l'inondation. Lors de la première introduction des points dans la FAH, les indicateurs des points changent de valeur, ils prennent par exemple la valeur binaire 1. Par la suite, la lecture de cet indicateur, pour chaque point, préalablement à l'introduction de ce point dans la FAH, permet de ne pas l'y remettre à nouveau si par ailleurs le label pour lequel il devrait y être remis est le même que celui que ce point possède déjà. Dans notre exemple, tous les points d'image dont la valeur du signal d'image est inférieure à m₁ reçoivent un label "lm₃".

Lorsque tous les points de valeur de signal strictement inférieure à m₁ ont été inondés (extrait de la FAH), le minimum M₁ et tous les points de valeur de signal égale à m₁ seront extraits à leur tour de la FAH avant d'inonder leurs voisins non encore inondés. Puis les points dont la valeur est supérieure à m₁ et inférieure à m₂ recevront progressivement les labels "lm₁" ou "lm₃" selon que leur introduction dans la file d'attente a été provoquée par leur appartenance au voisinage de M₃ ou de M₁. Ce phénomène se poursuit jusqu'à ce que, à la fois dans la file d'attente et en niveau d'inondation, on arrive au niveau de signal m₂. Dans ce cas, une troisième famille de points naît qui possède le label "lm₂" à côté des points possédant maintenant les labels "lm₁" et "lm₃".

Le niveau continue à monter. Ceci signifie qu'on continue à ranger dans la file d'attente les voisins de M₁, M₂ ou M₃, et à les extraire au fur et à mesure jusqu'à ce qu'on arrive au point A qui doit à son tour être mis dans la file d'attente, par exemple, parce qu'il est voisin d'un point inondé par la nappe provenant de M₁. Le point A reçoit donc, en plus de sa valeur de signal d'image a, un label "lm₁" montrant la cause de son introduction dans la file d'attente hiérarchisée. Mais, le point A étant frontière entre le bassin versant M₃ et le bassin versant M₁ il va être à nouveau injecté dans la file d'attente parce qu'il est voisin d'un des points du bassin versant M₃ quand ce point du bassin versant M₃ lui-même sera extrait. A est un maximum mais ce n'est pas nécessairement le cas sur une image à deux ou trois dimensions. En effet sur une image à deux dimensions, il y a une multitude de chemins (successions de points voisins) qui conduisent d'un point (le minimum étudié par exemple) à un autre point (un minimum de plus basse altitude par exemple). Parmi tous les chemins possibles, un est intéressant: c'est celui dont le maximum est le plus bas. C'est en fait par lui qu'en pratique se propage l'inondation. Les nappes issues des deux minima entrent en contact à l'endroit du sommet de ce chemin. A peut ainsi être un col tel que 105 ou 106.

Au moment où le point A doit être injecté à nouveau dans la file d'attente, pour recevoir maintenant le label "lm₃", par exemple, on constate un conflit puisque le point A possède déjà le label "lm₁". Rendu à ce stade il est possible de calculer la dynamique du minimum M₁. En effet, étant donné que M₁ a un signal d'image supérieur à celui de M₃, on peut calculer la dynamique de M₁. Cette dynamique est tout simplement égale à a-m₁. Selon ce qui a été indiqué précédemment la dynamique a-m₁ est bien la différence entre le signal (a) d'image correspondant au plus petit des maxima (A) voisins du minimum M₁ étudié et la valeur du signal d'image m₁ en ce minimum étudié. On voit que la technique d'inondation, et l'étude des voisinages indiquée ci-dessus, permettent d'appréhender d'une manière immédiate toutes les directions d'exploration puisqu'ici le voisinage n'est pas nécessairement un voisinage à une dimension mais est un voisinage à deux dimensions. La liste des points voisins introduits dans la file d'attente sert de mode d'exploration dans toutes les directions à la fois.

Au moment de l'exploration, lorsqu'un point est extrait de la file d'attente hiérarchisée on y fait rentrer ses voisins en prenant soin que ces voisins n'aient pas déjà été entrés dans la file d'attente, avec le même label. S'ils sont sollicités pour y entrer avec le même label, on ne les fait pas entrer. S'ils sont sollicités pour y entrer avec un label différent on détecte à ce moment là que ce sont des points frontières. Ceci est une technique pour détecter les points particuliers. Il en existe d'autres. Par exemple, au moment de rentrer un point X dans la FAH, on peut n'effectuer que le test vérifiant qu'il ne s'y trouve pas déjà. Ensuite, lorsque ce point est sorti de la file d'attente, on regarde s'il existe des points inondés avec des labels différents dans son voisinage. Si c'est le cas, ce point est alors un point frontière et il est alors possible de calculer la dynamique d'un des minima alimentant les nappes entrant en contact comme expliqué précédemment.

Une fois qu'un conflit s'est produit, après l'extraction du point A par exemple, tous les voisins inondés du point en conflit (les voisins inondés de A et les voisins inondés des voisins inondés de A) reçoivent le label du minimum le plus profond: ici le label "lm₃", celui de M₃ et non celui de M₁. Dans notre exemple tous les points ayant reçu le label "lm₁", se voient affecter le label "lm₃". Ce procédé permet de continuer l'inondation pour calculer la dynamique des autres minima en ne tenant plus compte du minimum M₁ dont la dynamique est maintenant connue. Dans notre exemple, au cours de l'inondation, le conflit suivant apparaîtra lorsque les nappes issues des minima P et M entreront en contact. On calculera la dynamique de P (car ce minimum a une valeur de signal plus élevée que celle du minimum M), et les points inondés ayant le label "lp" prendront le label "lm". L'inondation continue et les nappes issues de M₃ et Q entreront en contact et on pourra alors calculer la dynamique de Q. Et ainsi de suite jusqu'à ce que la totalité du relief soit inondée.

Le concept de l'inondation est un traitement de type connu et donc facilement mis en oeuvre. On l'utilise par exemple pour calculer la ligne de partage des eaux selon le deuxième article cité. Dans l'invention on gère les conflits différemment lorsque deux nappes entrent en contact. Pour la LPE, les deux nappes entrées en contact continuent à inonder leurs voisins non encore inondés, sans que les nappes ne se mélangent ou s'absorbent. Cette méthode permet de calculer les bassins versants associés aux minima. Dans l'invention lorsque deux nappes (ou plus) entrent en contact, seul le label de la nappe dont le minimum est le plus profond est conservé. Les autres n'interviennent plus dans le processus d'inondation. Et la dynamique de leur minimum est calculé.

Une fois qu'on connaît la dynamique pour chacun des minima, on peut les trier en comparant les minima pour lesquels la dynamique est inférieure ou bien est supérieure à un seuil. Si elle est inférieure à un seuil on comprend qu'elle sera vraisemblablement synonyme d'une faible variation de contraste par rapport à son entourage et que par conséquent on pourra éliminer ces points comme non caractéristiques du phénomène physique étudié et qu'on cherche à montrer. Le seuil qu'on peut retenir est de préférence celui qui correspond au bruit. La mesure de ce dernier peut être faite sur toute l'image ou bien localement. Dans son principe elle comporte le moyennage des signaux d'image et la sommation des valeurs absolues des différences entre les signaux d'images et leur moyenne, point d'image par point d'image.

Ainsi pour reconstituer un seuil on agit préférentiellement de la manière suivante. On filtre le signal avec un filtre spatial dont la dimension est de nature à faire disparaître les petites structures et à révéler les grosses structures. On soustrait ensuite le signal ainsi filtré du signal original et on évalue ainsi le bruit de mesure. On mesure localement la valeur de ce bruit de mesure et on s'en sert localement comme valeur de seuil pour comparer cette valeur de seuil aux dynamiques des minima détectés. Ainsi, d'un endroit d'image à l'autre la valeur de seuil servira à déterminer si un minimum représente un point caractéristique de l'image peut être modifié localement. Ceci permet en particulier de tenir compte des effets de non linéarité de la révélation du contraste sur des radiographies.

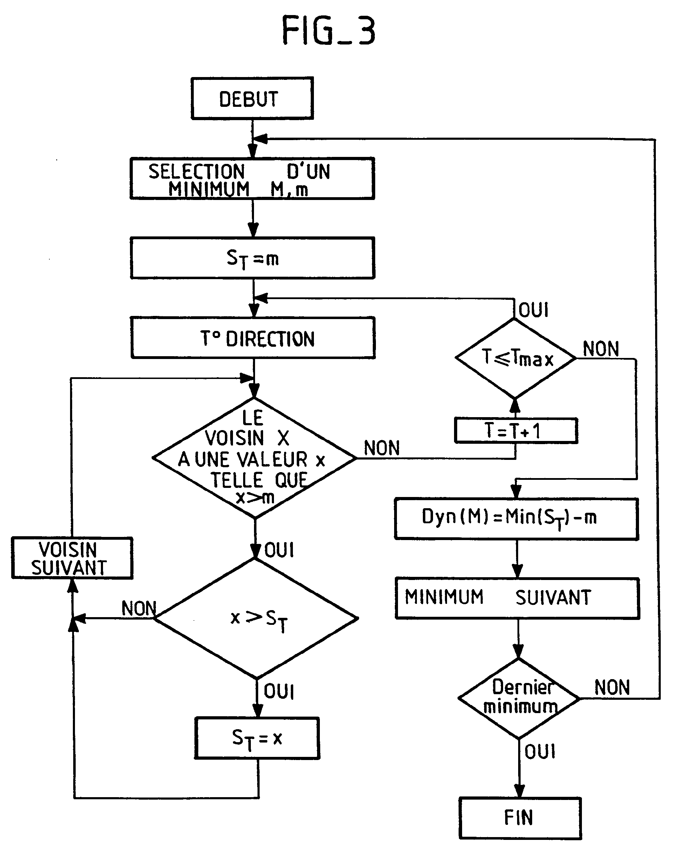

La figure 3 montre un organigramme utilisable pour mettre en oeuvre le procédé décrit schématiquement à la figure 1. Après un début au cours duquel on repère tous les minima, on sélectionne un minimum M de valeur de signal m. On explore une à une toutes les directions possibles T d'évolution de ce signal. Dans ces directions possibles, on cherche au cours d'un premier test si un point X voisin d'un point courant étudié a une valeur de signal x telle que x est plus grand que m. Si c'est le cas on regarde si x est supérieur à un seuil ST courant. Si ce test est vérifié, on donne à ST la valeur x. Au début ceci est le cas puisqu'on a choisi justement ce seuil courant ST égal à la valeur m. Ce test se produit sur tous les voisins successifs tant qu'un signal inférieur à x n'est pas trouvé. Les voisins successifs comportent bien entendu les voisins des voisins et ainsi de suite. Ainsi pour la direction allant de M vers M₁, la valeur ST affectée à cette direction est égale à y. Quand une direction a été explorée, on explore une autre direction, à condition qu'on ne les ait pas toutes explorées. Une fois qu'on a exploré toutes les directions, lorsque T est égal ou supérieur à Tmax on détermine que la dynamique du point M est égale au minimum des valeurs ST choisies, moins la valeur m du minimum M étudié. Ceci étant effectué, on fait le même travail pour le minimum suivant dans la liste des minima élaborée au début et ainsi de suite.

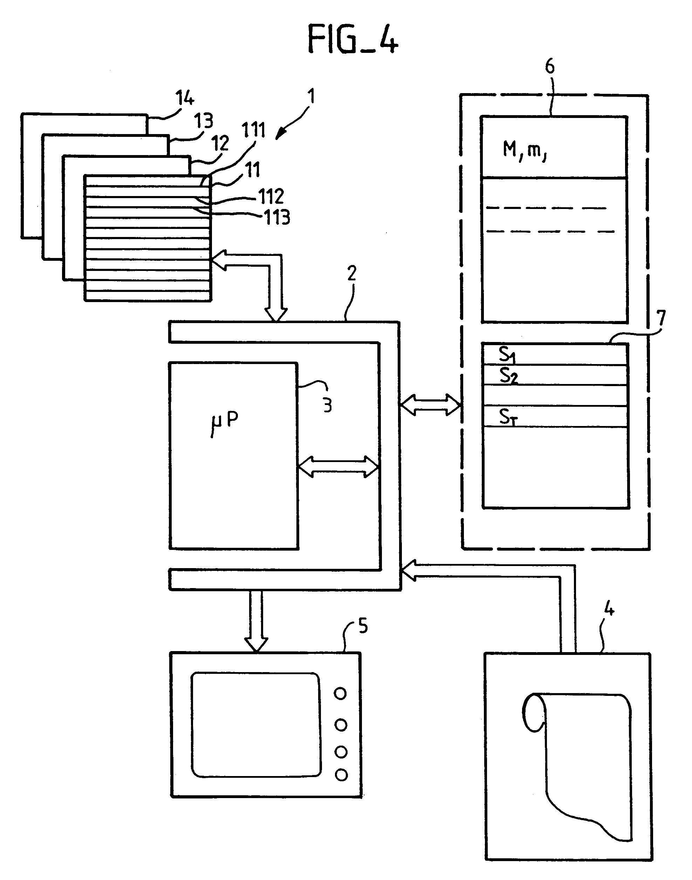

La figure 4 montre l'ensemble des matériels utilisables pour mettre en oeuvre le procédé de l'invention. Une mémoire d'image 1 comporte un certain nombre de pages mémoires 11, 12, 13 et 14 munies chacune d'une certain nombre de lignes de points d'image telles que 111, 112, 113, etc... Cette mémoire d'image 1 est en relation par l'intermédiaire d'un bus d'échange 2 avec une unité arithmétique et logique 3 qui met en oeuvre un programme contenu dans une mémoire programme 4. La mémoire programme 4 est également en relation avec l'unité arithmétique et logique 3 par le bus 2. Des moyens de visualisation 5 également connectés au bus 2 permettent de représenter les images traitées par l'unité 3. Selon l'invention on stocke dans une mémoire 6 la liste des minima M associée à la valeur m de leur signal d'image ainsi qu'à la mesure de leur dynamique. On peut également stocker dans une autre mémoire 7 les valeurs des maxima ST correspondant aux différentes explorations effectuées.

Dans la suite du traitement de l'image on utilise la mémoire 6 pour constituer une banque de marqueurs d'image. Dans une application qu'on cherche à entourer par un procédé de traitement d'image du type LPE ces marqueurs pour délimiter leur zone d'influence.

## Revendications

1. Procédé de traitement d'image, caractérisé en ce qu'il comporte les étapes suivantes:
- on repère des points minima d'image pour lesquels un signal d'image est un minimum, c'est à dire que tous les points d'image directement voisins et contigus à ce point présentent des signaux d'image dont la valeur est plus grande;
- on mesure pour chacun de ces points minima une dynamique de signal d'image en fonction du voisinage de ces points minima, cette dynamique de signal étant constituée, pour un point minimum, par la différence entre le signal d'image en ce point minimum et un point minimum maximorum de ce signal d'image, chaque point maximum considéré pour déterminer ce point minimum maximorum étant maximum pour l'ensemble des points directement voisins et contigus à ce point maximum se trouvant sur un des chemins conduisant de ce point minimum à une limite de ce voisinage,
- on extrait de ces points minima ceux dont la valeur de la dynamique est supérieur à un seuil, et
- on traite l'image en fonction de la liste des points minima extraits.

2. Procédé de traitement d'image, caractérisé en ce qu'il comporte les étapes suivantes:
- on repère des points maxima d'image pour lesquels un signal d'image est un maximum, c'est à dire que tous les points d'image directement voisins et contigus à ce point présentent des signaux d'image dont la valeur est plus petite;
- on mesure pour chacun de ces points maxima une dynamique de signal d'image en fonction du voisinage de ces points maxima, cette dynamique de signal étant constituée, pour un point maximum, par la différence entre le signal d'image en ce point maximum et un point maximum minimorum de ce signal d'image, chaque point minimum considéré pour déterminer ce point maximum minimorum étant minimum pour l'ensemble des points directement voisins et contigus à ce point minimum se trouvant sur un des chemins conduisant de ce point maximum à une limite de ce voisinage,
- on extrait de ces points maxima ceux dont la valeur de la dynamique est supérieur à un seuil, et
- on traite l'image en fonction de la liste des points maxima extraits.

3. Procédé selon la revendication 1 ou la revendication 2, caractérisé en ce que
- on choisit, pour une évolution donnée du contraste, de rechercher les points limites d'images dont la valeur du signal d'image est inférieure à celle du point minimum, ou respectivement supérieure à celle du point maximum,
- et on retient comme voisinage les points intermédiaires situés entre ces points minimum, ou respectivement maximum, et ces points limites.

4. Procédé selon la revendication 1 et la revendication 3, caractérisé en ce que,
- on choisit comme point caractéristique du voisinage un point possédant, dans une direction, un signal d'image plus grand que celui de tous les autres points du voisinage dans cette même direction,
- on recherche des points similaires ayant les mêmes propriétés dans d'autres directions,
- et on choisit comme point caractéristique parmi ces points similaires celui qui a le signal d'image le plus faible.

5. Procédé selon la revendication 1 et la revendication 3, caractérisé en ce que pour déterminer la dynamique,
- on donne, à chaque point correspondant à un minimum du signal d'image, un label représentatif de ce minimum,
- on range tous les points d'image correspondant à ces minima dans une file d'attente hiérarchisée,
- on extrait ces points de la file d'attente hiérarchisée en commençant par le plus petit en valeur,
- on fait rentrer les voisins directs des points extraits dans la file d'attente hiérarchisée au moment de l'extraction de ces points,
- on attribue aux points entrés dans la file d'attente hiérarchisée un label identique à celui du point dont ils sont les voisins et dont l'extraction de la file a provoqué leur entrée, et
- on donne comme dynamique à un premier minimum la différence entre la valeur du signal d'image en ce premier minimum et la valeur du signal d'image en un point qui doit entrer dans la file d'attente avec le label de ce premier minimum ainsi qu'avec le label d'un deuxième minimum mais dont la valeur du signal d'image est plus faible.

6. Procédé selon la revendication 5, caractérisé en ce que
- on donne, aux points d'image qui avaient reçu le label du premier minimum dont on vient de déterminer la dynamique, un label de remplacement correspondant au deuxième minimum dont le signal d'image était plus faible.

7. Procédé selon la revendication 6, caractérisé en ce que pour donner un label de remplacement
- on crée une table de correspondance des labels pour attribuer aux points voisins du premier minimum le label du deuxième minimum.

8. Procédé selon l'une quelconque des revendications 1 à 4, caractérisé en ce que
- le traitement d'image comporte une opération de contourage de zones autour des minima ou maxima extraits,
- cette opération étant, par exemple, menée selon un procédé de traitement d'images avec files d'attentes hiérarchisées.

9. Procédé selon l'une quelconque des revendications 1 à 4 caractérisé en ce que
- comme dynamique on retient la distance qui sépare le point correspondant au minimum du point caractéristique.

## Patentansprüche

1. Verfahren zur Bildverarbeitung, dadurch gekennzeichnet, daß es die folgenden Schritte umfaßt:
- Bestimmen aller Minimumbildpunkte für welche ein Bildsignal ein Minimum aufweist, das heißt, daß alle unmittelbar benachbarten und an diesen Punkt angrenzenden Bildpunkte Bildsignale mit einem größeren Wert aufweisen,
- Messen einer Bildsignaldynamik für jeden dieser Minimumpunkte in Abhängigkeit der Umgehung dieser Minimumpunkte, wobei sich diese Dynamik für einen Minimumpunkt aus der Differenz zwischen dem Bildsignal in diesem Minimumpunkt und in einem minimalen Maximumpunkt dieses Bildsignals zusammensetzt und jeder Maximumpunkt, der zum Bestimmen dieses minimalen Maximumpunktes herangezogen wird, ein Maximum für die Gesamtheit der unmittelbar benachbarten und an diesen Maximumpunkt angrenzenden Punkte darstellt und sich auf einem der Wege befindet, die von diesem Minimun punkt zu einer Grenze dieser Umgebung führen,
- Extrahieren derjenigen Punkte aus diesen Minimumpunkten, deren Dynamikwert größer ist als ein Schwellwert, und
- Verarbeiten des Bildes in Abhängigkeit der Liste der extrahierten Minimumpunkte.

2. Verfahren zur Bildverarbeitung, dadurch gekennzeichnet, daß es die folgenden Schritte umfaßt:
- Bestimmen aller Maximumbildpunkte für welche ein Bildsignal ein Maximum aufweist, das heißt, daß alle unmittelbar benachbarten und an diesen Punkt angrenzenden Bildpunkte Bildsignale mit einem kleineren Wert aufweisen,
- Messen einer Bildsignaldynamik für jeden dieser Maximumpunkte in Abhängigkeit der Umgebung dieser Maximumpunkte, wobei sich diese Dynamik für einen Maximumpunkt aus der Differenz zwischen dem Bildsignal in diesem Maximumpunkt und in einem maximalen Minimumpunkt dieses Bildsignals zusammensetzt und jeder Minimumpunkt, der zum Bestimmen dieses maximalen Minimumpunktes herangezogen wird, ein Minimum für die Gesamtheit der unmittelbar benachbarten und an diesen Minimumpunkt angrenzenden Punkte darstellt und sich auf einem der Wege befindet, die von diesem Maximumpunkt zu einer Grenze dieser Umgebung führen,
- Extrahieren derjenigen Punkte aus diesen Maximumpunkten, deren Dynamikwert größer ist als ein Schwellwert, und
- Verarbeiten des Bildes in Abhängigkeit der Liste der extrahierten Maximumpunkte.

3. Verfahren nach Anspruch 1 oder Anspruch 2, dadurch gekennzeichnet, daß
- für eine gegebene Kontrastentwicklung entschieden wird, die Grenzbildpunkte zu suchen, deren Bildsignalwert kleiner ist als derjenige des Minimumpunktes bzw. größer ist als derjenige des Maxmimumpunktes,
- und als Umgebung die zwischen den Minimumpunkten bzw. den Maximumpunkten und den Grenzpunkten liegenden Zwischenpunkte zurückbehalten werden.

4. Verfahren nach Anspruch 1 und Anspruch 3, dadurch gekennzeichnet, daß
- als charakteristischer Punkt der Umgebung ein Punkt ausgewählt wird, der in einer Richtung ein größeres Bildsignal aufweist als dasjenige aller anderen Punkte der Umgebung in dieser gleichen Richtung,
- ähnliche Punkte in anderen Richtungen gesucht werden, die die gleichen Eigenschaften aufweisen,
- und derjenige unter diesen ähnlichen Punkten als charakteristischer Punkt ausgewählt wird, der das schwächste Bildsignal aufweist.

5. Verfahren nach Anspruch 1 und Anspruch 3, dadurch gekennzeichnet, daß zum Bestimmen der Dynamik
- jedem Punkt, der einem Minimum des Bildsignals entspricht, ein das Minimum darstellendes Kennzeichen zugeteilt wird,
- alle diesen Minima entsprechenden Bildpunkte in einer hierarchisierten Warteschlange sortiert werden,
- die Punkte beginnend mit dem kleinsten Wert aus der hierarchisierten Warteschlange entnommen werden,
- die unmittelbaren Nachbarn der entnommenen Punkte im Augenblick der Entnahme dieser Punkte in die Warteschlange zurückgeordnet werden,
- den in die hierarchisierte Warteschlange eingeordneten Punkte ein Kennzeichen zugeteilt wird, das dem Kennzeichen desjenigen Punktes identisch ist, dessen Nachbarn sie sind und durch dessen Entnahme aus der Schlange ihre Einordnung ausgelöst wurde,
- einem ersten Minimum als Dynamik die Differenz zwischen dem Bildsignalwert in diesem ersten Minimum und dem Bildsignalwert in einem Punkt zugeteilt wird, der mit dem Kennzeichen dieses ersten Minimums sowie mit dem Kennzeichen eines zweiten Minimums, dessen Bildsignalwert jedoch schwächer ist, in die Warteschlange eintreten muß.

6. Verfahren nach Anspruch 5, dadurch gekennzeichnet, daß
- den Bildpunkten, die das Kennzeichen des ersten Minimums erhalten haben, dessen Dynamik gerade bestimmt wurde, ein Ersatzkennzeichen zugeteilt wird, das dem zweiten Minimum entspricht, dessen Bildsignal schwächer war.

7. Verfahren nach Anspruch 6, dadurch gekennzeichnet, daß zum Zuteilen eines Ersatzkennzeichens
- eine Korrespondenztabelle der Kennzeichen erstellt wird, um den benachbarten Punkten des ersten Minimums das Kennzeichen des zweiten Minimums zuzuordnen.

8. Verfahren nach einem der Ansprüche 1 bis 4, dadurch gekennzeichnet, daß
- die Bildverarbeitung einen Verfahrensschritt der Umrandung der Bereichte um die entnommenen Minima oder Maxima umfaßt,
- wobei dieser Verfahrensschritt beispielsweise nach einem Verfahren zur Bildverarbeitung mit hierarchisierten Warteschlangen ausgeführt wird.

9. Verfahren nach einem der Ansprüche 1 bis 4, dadurch gekennzeichnet, daß
- als Dynamik die Entfernung zurückbehalten wird, die den dem Minimum entsprechenden Punkt von dem charakteristischen Punkt trennt.

## Claims

1. Image processing process, characterised by the fact that it comprises the following stages:
- marking of minimum points of the image for which an image signal is a minimum, i.e. all the image points directly neighbouring and adjacent to this point present image signals of higher value;
- for each of these minimum points the image signal dynamics are measured according to the proximity of these minimum points, these signal dynamics consisting, for a given minimum point, of the difference between the image signal at this minimum point and a minimum maximorum point for this image signal, each maximum point taken into account in determining this minimum maximorum point being the maximum for all the points directly neighbouring and adjacent this maximum point, located on one of the paths leading from this minimum point to a limit in this vicinity;
- from these minimum points, those of a dynamic value greater than a given threshold are extracted, and
- the image is processed according to the list of minimum points extracted.

2. Image processing process characterised by the fact that it comprises the following stages:
- maximum points of the image are marked for which an image signal is a maximum, i.e. all the image points directly neighbouring and adjacent to this point present image signals of lower value;
- for each of these maximum points the image signal dynamics are measured according to the proximity of these maximum points, these signal dynamics consisting, for a given maximum point, of the difference between the image signal at this maximum point and a maximum minimorum point for this image signal, each minimum point taken into account in determining this maximum minimorum point being the minimum for all the points directly neighbouring and adjacent to this minimum point, located on one of the paths leading from this maximum point to a limit in this vicinity;
- from these maximum points, those of a dynamic value greater than a given threshold are extracted, and
- the image is processed according to the list of maximum points extracted.

3. process as per claim 1 or claim 2 characterised by the fact that
- for a given development in contrast, a search is made for the limit points of images whose image signal value is less than that of the minimum point or, respectively, greater than that of the maximum point;
- and the vicinity is taken as the intermediate points situated between these minimum or, respectively, maximum points and these limit points.

4. Process as per claim 1 and claim 3, characterised by the fact that
- the characteristic point of proximity is taken as a point having a larger image signal in one direction than that of all the other points in the vicinity in this same direction;
- similar points with the same properties in other directions are sought;
- and the characteristic point amongst these similar points is taken as the one with the lowest image signal.

5. Process as per claim 1 and claim 3, characterised by the fact that, in order to determine the dynamics
- at each point corresponding to an image signal minimum, a label representing this minimum is given;
- all the image points corresponding to these minimum points are ranked in a hierarchical queue;
- these points are extracted from the hierarchical queue starting with the one with the lowest value;
- the direct neighbours of the points extracted from the hierarchical queue are re-entered when these points are extracted;
- points entered in the hierarchical queue are assigned a label identical to that of the point to which they are adjacent and whose extraction from the queue caused their entry, and
- the dynamics of the first minumum are taken as the difference between the value of the image signal at this first minimum and the value of the image signal at a point which must be entered in the queue with the label of this first minimum as well as with the label of a second minimum but with a lower image signal value.

6. Process as per claim 5, characterised by the fact that,
- for the image points assigned the label of the first minimum for which the dynamics have been determined, a replacement label is given corresponding to the second minimum which has a weaker image signal.

7. Process as per claim 6, characterised by the fact that, in order to assign a replacement label
- a correspondence table of labels is created to assign the label of the second minimum to the adjacent points of the first minimum.

8. Process as per any of claims 1 to 4, characterised by the fact that,
- image processing entails a contouring procedure for areas around the extracted minimums or maximums;
- this procedure being carried out, for example, by an image processing process with hierarchical queues.

9. Process as per any of claims 1 to 4, characterised by the fact that,
- the distance between the point corresponding to the minimum and the characteristic point is taken for the dynamics.
